# EUROPÄISCHE PATENTSCHRIFT

(11) **EP 3 348 430 B1**
(45) Veröffentlichungstag und Bekanntmachung des Hinweises auf die Patenterteilung: **24.07.2019**
(21) Anmeldenummer: 17208534.2
(22) Anmeldetag: 19.12.2017
(51) Int. Cl.: B60D 1/32, B62D 13/00, B62D 47/02, F16F 9/512

(54) **HYDRAULISCHES DÄMPFUNGSSYSTEM UND GELENKFAHRZEUG MIT EINEM DERARTIGEN DÄMPFUNGSSYSTEM**
HYDRAULIC DAMPING SYSTEM AND ARTICULATED VEHICLE WITH SUCH A DAMPING SYSTEM
SYSTÈME D'AMORTISSEMENT HYDRAULIQUE ET VÉHICULE ARTICULÉ POURVU D'UN TEL SYSTÈME D'AMORTISSEMENT

(30) Priorität: 11.01.2017 DE 102017100395
(43) Veröffentlichungstag der Anmeldung: 18.07.2018
(73) Patentinhaber: CLAAS Industrietechnik GmbH, 33106 Paderborn (DE)
(72) Erfinder: Seibel, Burkhard, 33604 Bielefeld (DE)
(74) Vertreter: CLAAS Gruppe

(56) Entgegenhaltungen:
- EP-A1- 0 872 644
- EP-B1- 1 010 608
- DE-U1- 20 317 243

## Beschreibung

Die Erfindung betrifft ein hydraulisches Dämpfungssystem zur Dämpfung von Schwenkbewegungen zweier zumindest mittelbar über ein Drehgelenk miteinander verbundener Fahrzeugteile mit zumindest einem als doppeltwirkender Hydraulikzylinder ausgebildeten Dämpfer, dessen druck- und saugseitige Druckräume über ein Proportional-Druckbegrenzungsventil miteinander verbunden sind.

Weiterhin betrifft die Erfindung ein Gelenkfahrzeug, bei dem zwei Fahrzeugteile zumindest mittelbar über ein Drehgelenk schwenkbar miteinander verbunden und mittels zumindest eines doppeltwirkenden Hydraulikzylinders eines Dämpfungssystems zueinander geführt sind, wobei in einer druck- und saugseitige Druckräume des zumindest einen Hydraulikzylinders verbindenden Dämpfungsleitung ein Proportional-Druckbegrenzungsventil angeordnet ist.

Gelenkfahrzeuge sind Kraftfahrzeuge, die vorzugsweise als Niederflur-Gelenkbusse ausgebildet sind, wobei diese ein, in Fahrtrichtung gesehen, vorderes Fahrzeugteil und ein hinteres Fahrzeugteil aufweisen. Zwischen diesen ist eine drehschemelartige Gelenkanordnung vorgesehen, die zur Verringerung des Wenderadius des entsprechenden Kraftfahrzeugs Knickwinkel zwischen den beiden Fahrzeugteilen zulassen und dabei eine im Wesentlichen vertikale Gelenkachse aufweisen. Darüber hinaus können im Rahmen der Kopplung der beiden Fahrzeugteile auch horizontal verlaufende Gelenkachsen vorgesehen sein, um die diese zueinander Nickbewegungen ausführen können.

Für den Antrieb derartiger Gelenkfahrzeuge ist zumeist eine Antriebsachse vorgesehen, die als letzte Achse innerhalb des hinteren Fahrzeugteils angeordnet ist und somit das gesamte Gelenkfahrzeug, also auch den vorderen Fahrzeugteil über das Drehgelenk, schiebt. Ohne eine zwischen den beiden Fahrzeugteilen angeordnete, deren zueinander ausgeführte Bewegungen dämpfende Einrichtung, könnten schnell ausgeführte Knickbewegungen des Gelenkfahrzeugs zu dessen Ausbrechen führen. Aus diesem Grund ist zwischen den gelenkig zueinander geführten Teilen der Gelenkanordnung ein Dämpfungssystem angeordnet, das zumindest einen als Stoßdämpfer dienenden doppeltwirkenden Hydraulikzylinder aufweist. Der Ölstrom zwischen Druckräumen dieses Hydraulikzylinders wird gedrosselt, um eine Dämpfungswirkung zu erzielen.

Ein hydraulisches Dämpfungssystem der im Oberbegriff der Patentansprüche 1, 9 und 12 angegebenen Gattung, das für ein Gelenkfahrzeug vorgesehen ist, geht aus der EP 1 010 608 B1 als bekannt hervor. Dabei ist für die Dämpfung der Drehbewegung eines Drehgelenkes zwischen zwei Fahrzeugteilen eines Gelenkfahrzeuges, z.B. eines Gelenkbusses ein Drehgelenk mit einem diesem zugeordneten Dämpfungssystem vorgesehen. Das Drehgelenk weist zwei Gelenkglieder auf, die durch eine Gelenkachse schwenkbar miteinander verbunden sind. Das eine Gelenkglied kann hierbei unmittelbar an dem einen Fahrzeugteil angelenkt sein, wohingegen das andere Gelenkglied um eine horizontal verlaufende Achse, zum Ausgleich von Nickbewegungen, schwenkbar unmittelbar mit dem anderen Fahrzeugteil verbindbar ist. Die Hydraulikanlage ist dabei steuerbar, wodurch eine verbesserte Dämpfungswirkung bei Kurvenfahrt und Geradeausfahrt erreicht werden kann.

Zwischen der Saug- und der Druckseite der Dämpfungsanordnung soll zusätzlich zu einem Proportional-Druckbegrenzungsventil ein parallel geschaltetes mechanisches Druckbegrenzungsventil vorgesehen sein. Diese beiden Druckbegrenzungsventile werden wahlweise über ein als 2/2-Wegeventil ausgebildetes Mehrwegeventil angesteuert. Im Normalbetrieb der Dämpfungsanordnung befindet sich das Mehrwegeventil in seiner Durchflussstellung, in der das Proportional-Druckbegrenzungsventil beaufschlagt wird. Bei einem Ausfall der Steuerung oder der Funktion des Proportional-Druckbegrenzungsventil, also im Notbetrieb, soll das elektromagnetisch betätigte Mehrwegeventil in eine Sperrstellung verschoben werden, so dass das in einer vor diesem abzweigenden Leitung angeordnete mechanisches Druckbegrenzungsventil mit Druckmittel aus einem der Druckräume beaufschlagt wird.

Es ist Aufgabe der vorliegenden Erfindung, ein hydraulisches Dämpfungssystem der vorgenannten Gattung derart zu gestalten, dass dessen Funktion verbessert wird und dieses mit kostengünstigen Mitteln herstellbar ist.

Diese Aufgabe wird, ausgehend von dem jeweiligen Oberbegriff der Patentansprüche 1, 9 und 12 durch deren kennzeichnende Merkmale gelöst. Vorteilhafte Ausgestaltungen sind in den von den Patentansprüchen 1 und 9 abhängigen Patentansprüchen wiedergegeben, welche jeweils für sich genommen oder in Kombination miteinander einen Aspekt der Erfindung darstellen können.

Danach ist ein hydraulisches Dämpfungssystem zur Dämpfung von Schwenkbewegungen zweier über ein Drehgelenk miteinander verbundener Fahrzeugteile mit zumindest einem als doppeltwirkender Hydraulikzylinder ausgebildeten Dämpfer vorgesehen. Dabei kann ein doppeltwirkender einen mit zwei Kolbenstangen versehenen Kolben aufweisen, wobei die jeweiligen vom Kolben abgewandten Enden der Kolbenstangen zumindest mittelbar mit den Fahrzeugteilen verbunden sind. Im Rahmen der Gelenkanordnung kann auch ein mit einer Zahnstange zusammenwirkendes Zahnrad vorgesehen sein, das drehfest mit dem drehbaren Gelenkteil verbunden ist. Die Zahnstange nimmt dabei den Kolben des doppeltwirkenden Hydraulikzylinders auf.

Alternativ dazu können aber auch zwei doppeltwirkende Hydraulikzylinder mit jeweils einer Kolbenstange vorgesehen sein, wobei der jeweilige Zylinder mit dem einen Fahrzeugteil und die Kolbenstange mit einem Gelenkteil des anderen Fahrzeugteils verbunden sind. In diesem Fall ist jeweils ein kolbenseitiger Druckraum des einen Hydraulikzylinders mit einem kolbenstangenseitigen Druckraum des anderen Hydraulikzylinders verbunden.

Die entsprechenden druck- und saugseitigen Druckräume sind bei beiden Ausführungen und Anordnungen des bzw. der Hydraulikzylinder über ein Proportional-Druckbegrenzungsventil miteinander verbunden. Dieses sorgt in dem Druckraum, aus dem Druckmittel verdrängt wird, für einen Druckaufbau und bei einem druckabhängigen Öffnen für einen gedämpften Druckabfall in der entsprechenden Dämpferleitung, so dass die Bewegung des oder der Kolben gedämpft wird.

Dabei ist das Proportional-Druckbegrenzungsventil als elektrisch vorgesteuertes inverses Proportional-Druckbegrenzungsventil ausgebildet, mit dem im stromlosen Zustand eines Proportionalmagneten oder bei einem Ausfall der elektromagnetischen Betätigung im Dämpfungssystem ein Nenndruck einstellbar ist. Dieses inverse Proportional-Druckbegrenzungsventil weist somit eine Funktion auf, nach der bei steigendem elektrischen Eingangssignal der Druck absinkt, während dieser bei sinkendem Eingangssignal steigt. Beispielsweise kann bei einem Ausfall des Eingangssignals oder einem Defekt der elektromagnetischen Betätigung als Fail-Safe-Funktion der eingestellte Druck bis auf den Nenndruck ansteigen, der einen sicheren Notbetrieb des Gelenkfahrzeuges gewährleistet. Damit ist bei derartigen Defekten ein ausreichendes Dämpfungsverhalten des Dämpfungssystems erhalten, so dass das Gelenkfahrzeug seine Fahrt bis in eine Werkstatt fortsetzen kann.

Demgegenüber weist das Dämpfungssystem nach der EP 1 010 608 B1 ein als 2/2-Wegeventil oder 3/2-Wegeventil ausgebildetes Mehrwegeventil auf, das im Normalbetrieb den jeweiligen Druckraum, dessen Volumen sich verringert, ausschließlich mit einem elektromagnetisch betätigten Proportional-Druckbegrenzungsventil verbindet. In seiner zweiten Schaltstellung, die einem Notbetrieb entspricht, wird der Zufluss zum elektromagnetisch betätigten Proportional-Druckbegrenzungsventil gesperrt und eine ausschließliche Verbindung des jeweiligen Druckraumes mit einem parallel oder in Reihe zu vorgenanntem Proportional-Druckbegrenzungsventil angeordneten mechanisch betätigten Druckbegrenzungsventil hergestellt. Letzteres ist auf einen bestimmten Mindestdruck, der im Notbetrieb wirksam sein soll, eingestellt. Diese Steuerung des Dämpfungssystems benötigt insgesamt drei Ventile, wodurch sich der Bauaufwand erhöht. Außerdem kann es bei einem Ausfall der Steuerung des Dämpfungssystems trotz Notdämpfungseigenschaften der Hydraulikanlage zu instabilen Fahrzuständen des Fahrzeuges, beispielsweise einem Aufschaukeln, kommen.

In weiterer Ausgestaltung der Erfindung ist vorgesehen, dass mit dem inversen Proportional-Druckbegrenzungsventil ein Proportional-Druckbegrenzungsventil in Reihe geschaltet ist, und dass in einem Notbetrieb des Dämpfungssystems ein hydraulischer Druck in dem jeweiligen Druckraum ausschließlich über das inverse Proportional-Druckbegrenzungsventil erzielbar ist. Der Notdämpfungsdruck muss bei einem Ausfall der elektrischen Steuerung auf ein Druckniveau abgesenkt werden können, um die Lenkbarkeit des Gelenkfahrzeugs zu gewährleisten. In diesem Betrieb des Fahrzeugs soll eine reduzierte Dämpfung der Bewegungen des Drehgelenks ermöglicht werden.

Aus diesem Grund sollen gemäß der Erfindung ein Proportional-Druckbegrenzungsventil, das vorzugsweise elektromagnetisch betätigt ist, mit dem inversen Proportional-Druckbegrenzungsventil in Reihe geschaltet werden. Beide Proportional-Druckbegrenzungsventile wirken logisch in einer "UND"-Verknüpfung zusammen, so dass sich die jeweils eingestellten Drücke addieren. Damit wird erreicht, dass sowohl bei Ausfall der Bordspannung als auch bei spezifikationsgemäßer elektrischer Ansteuerung der geforderte hydraulische Druck zu gewährleistet ist. Das elektrisch gesteuerte Proportional-Druckbegrenzungsventil wird dabei vorzugsweise fahrgeschwindigkeitsabhängig vorgesteuert.

Das inverse Proportional-Druckbegrenzungsventil wird im normalen Fahrbetrieb ebenfalls bestromt, und zwar derart, dass es bezogen auf das Proportional-Druckbegrenzungsventil eine inverse Steuerfunktion übernimmt. Wenn also der Steuerstrom hoch ist, werden das normale Proportional-Druckbegrenzungsventil auf einen hohen Druck und das inverse Proportional-Druckbegrenzungsventil auf einen niedrigen Druck eingestellt. Bei einem niedrigen Steuerstrom liegen die umgekehrten Druckverhältnisse vor. Eintrittsseitig der Anordnung der beiden Proportional-Druckbegrenzungsventile soll sich durch eine Addition beider Drücke ein Druckniveau einstellen, das dem für die Dämpfung geforderten Dämpfungsdruck, der im Hydraulikzylinder in jeder der beiden Bewegungsrichtungen des Kolbens wirkt, entspricht. Fällt aber die elektrische Steuerung aus, so gelangt das normale Proportional-Druckbegrenzungsventil in eine Stellung, in der nur ein sehr geringer oder kein Druck aufgebaut wird, während das ebenfalls stromlose inverse Proportional-Druckbegrenzungsventil einen Notdämpfungsdruck einstellt. Dabei kann das inverse Proportional-Druckbegrenzungsventil dem Proportional-Druckbegrenzungsventil vorgeschaltet sein.

Außerdem ist vorgesehen, dass das des inversen Proportional-Druckbegrenzungsventil eine Vorsteuerstufe aufweist, die bei einer Verringerung oder einem Ausfall des Steuerstromes in eine Sperr- oder Drosselstellung verstellt wird und einen Steuerdruck an einem Hauptkolben des inversen Proportional-Druckbegrenzungsventils aufbaut.

In weiterer Ausgestaltung der Erfindung kann zur Begrenzung des Druckes in den Druckräumen und der an Kolbenstangen des zumindest einen Hydraulikzylinders wirkenden Kräfte zum inversen Proportional-Druckbegrenzungsventil ein Druckbegrenzungsventil parallel geschaltet sein. Dabei soll dieses als Sicherheitsventil dienende Druckbegrenzungsventil auf einen maximal zulässigen Druck des Dämpfungssystems eingestellt sein, der vorgegeben ist durch die Knicksicherheit der Kolbenstangen.

Vorzugsweise kann dabei ein Faktor 3 der Knicksicherheit berücksichtigt werden. Beispielsweise kann das elektromagnetisch gesteuerte Proportional-Druckbegrenzungsventil einen Bereich des jeweiligen Begrenzungsdrucks von 0 - 350 bar aufweisen, wobei sich durch Addition dieser Drücke zu den jeweils vom inversen Proportional-Druckbegrenzungsventil aufgebauten Drücken ein maximaler Dämpfungsdruck von weniger als 200 bar ergibt. Vorzugsweise ist das parallel geschaltete Druckbegrenzungsventil auf einen Öffnungsdruck von 200 bar eingestellt.

Weiterhin kann austrittsseitig einer das inverse Proportional-Druckbegrenzungsventil und das Proportional-Druckbegrenzungsventil aufnehmenden Dämpfungsleitung von dieser eine an einen Tank angeschlossene ein Vorspannventil aufnehmende Tankleitung angeschlossen sein. Das Vorspannventil stellt in den Leitungsabschnitten, die jeweils mit dem sich vergrößernden Druckraum verbunden sind, einen Vorspanndruck her, der dazu führt, dass der Druckraum zwangsbefüllt wird. Damit wird Kavitation verhindert, die bei schnellen Bewegungen des im Hydraulikzylinder angeordneten Kolbens auftreten könnte.

Zusätzlich kann ein Nachsaugen von Druckflüssigkeit in zumindest einen der Druckräume dadurch erreicht werden, dass zumindest einer der Druckräume über zumindest ein entsperrbares Rückschlagventil mit einem Ölreservoir eines Tanks verbunden ist. Dabei kann das zumindest eine entsperrbare Rückschlagventil über eine an einen der Druckräume angeschlossene Steuerleitung in seine Öffnungsstellung betätigbar sein. Bei Druckräumen, die zum einen stirnseitig des Kolbens zylindrisch und zum anderen im Kolbenstangenbereich hohlzylindrisch ausgebildet sind, kann die Steuerleitung von dem hohlzylindrischen Steuerraum ausgehen. Der durch das Proportional-Druckbegrenzungsventil erzeugte Druck wird beispielsweise über den hohlzylindrischen Steuerraum und die Steuerleitung dem entsperrbaren Rückschlagventil zugeleitet, so dass dieses eine Verbindung zwischen dem Ausgleichsbehälter dienenden Tank und dem zylindrischen Druckraum herstellt und eine Ölvolumenstrom in den Druckraum gelangt.

Weiterhin wird die Aufgabe bei einem hydraulischen Dämpfungssystem zur Dämpfung von Schwenkbewegungen zweier über ein Drehgelenk zumindest mittelbar miteinander verbundener Fahrzeugteile mit zumindest einem als doppeltwirkender Hydraulikzylinder ausgebildeten Dämpfer, dessen druck- und saugseitige Druckräume über ein Proportional-Druckbegrenzungsventil miteinander verbunden sind, auch dadurch gelöst, dass zumindest einer der Druckräume über zumindest ein entsperrbares Rückschlagventil mit einem Ölreservoir eines Tanks verbunden ist. Eine entsprechende Möglichkeit für ein Nachsaugen von Druckmittel aus einem Ölreservoir soll folglich auch vorgesehen sein, wenn in der Dämpferleitung nur ein elektromagnetisch vorgesteuertes Proportional-Druckbegrenzungsventil angeordnet ist. Auch in diesem Fall kann austrittsseitig des Proportional-Druckbegrenzungsventils eine an den Tank angeschlossene ein Vorspannventil aufnehmende Rücklaufleitung angeschlossen sein. Auch mittels dieses Vorspannventils wird Kavitation im Dämpfungssystem verhindert.

Schließlich soll bei einem Gelenkfahrzeug, bei dem zwei Fahrzeugteile zumindest mittelbar über ein Drehgelenk schwenkbar miteinander verbunden und mittels zumindest eines doppeltwirkenden Hydraulikzylinders eines Dämpfungssystems zueinander geführt sind, in einer druck- und saugseitige Druckräumen des zumindest einen Hydraulikzylinders verbindenden Dämpfungsleitung ein Proportional-Druckbegrenzungsventil angeordnet sein. Dabei soll das Dämpfungssystem nach einem der Patentansprüche 1 bis 11 ausgebildet sein.

Die Erfindung ist nicht auf die angegebene Kombination der Merkmale der unabhängigen Patentansprüche 1, 9 und 12 mit den von diesen abhängigen Patentansprüchen beschränkt. Es ergeben sich darüber hinaus Möglichkeiten, einzelne Merkmale, soweit sie aus den Patentansprüchen, den Vorteilsangaben zu den Patentansprüchen, der nachfolgenden Beschreibung des Ausführungsbeispiels oder zumindest aus den Zeichnungen hervorgehen, miteinander zu kombinieren. Die Bezugnahme der Patentansprüche auf die Zeichnung durch entsprechende Verwendung vom Bezugszeichen soll den Schutzumfang der Patentansprüche nicht beschränken.

Zur weiteren Erläuterung der Erfindung wird auf die Zeichnung verwiesen, in der Ausführungsbeispiele dieser vereinfacht dargestellt sind. Es zeigen:
- Figur 1: einen hydraulischen Schaltplan eines erfindungsgemäß ausgebildeten Dämpfungssystems mit einem doppeltwirkenden Hydraulikzylinder, einer ein inverses Proportional-Druckbegrenzungsventil sowie ein elektromagnetisch betätigtes Proportional-Druckbegrenzungsventil aufnehmende Dämpferleitung und einem parallel zur Dämpferleitung geschalteten Druckbegrenzungsventil,
- Figur 2: eine zweite Ausführungsform eines Dämpfungssystems, bei dem das paraallel geschaltete Druckbegrenzungsventil entfallen ist und der doppeltwirkende Hydraulikzylinder zwei Kolbenstangen aufweist,
- Figur 3: eine dritte Ausführungsform eines Dämpfungssystems, bei dem dieses zwei doppeltwirkende Hydraulikzylinder aufweist,
- Figur 4: eine vierte Ausführungsform eines Dämpfungssystems, bei dem in Dämpferleitung nur ein elektromagnetisch betätigtes Proportional-Druckbegrenzungsventil angeordnet ist, wobei das Dämpfungssystem über ein Vorspannventil und entsperrbare Rückschlagventile mit einem Ölreservoir verbindbar ist,
- Figur 5: eine fünfte Ausführungsform eines Dämpfungssystems, das im Wesentlichen dem nach der Figur 4 entspricht, wobei aber in Übereinstimmung mit der Lösung nach der Figur 1 in der Dämpferleitung ein inverses Proportional-Druckbegrenzungsventil sowie ein elektromagnetisch betätigtes Proportional-Druckbegrenzungsventil angeordnet sind,
- Figur 6: als schematische Darstellung, ein zwischen zwei Fahrzeugteilen angeordnetes Drehgelenk und
- Figur 7: als schematische Darstellung im Längsschnitt, ein inverses Proportional-Druckbegrenzungsventil.

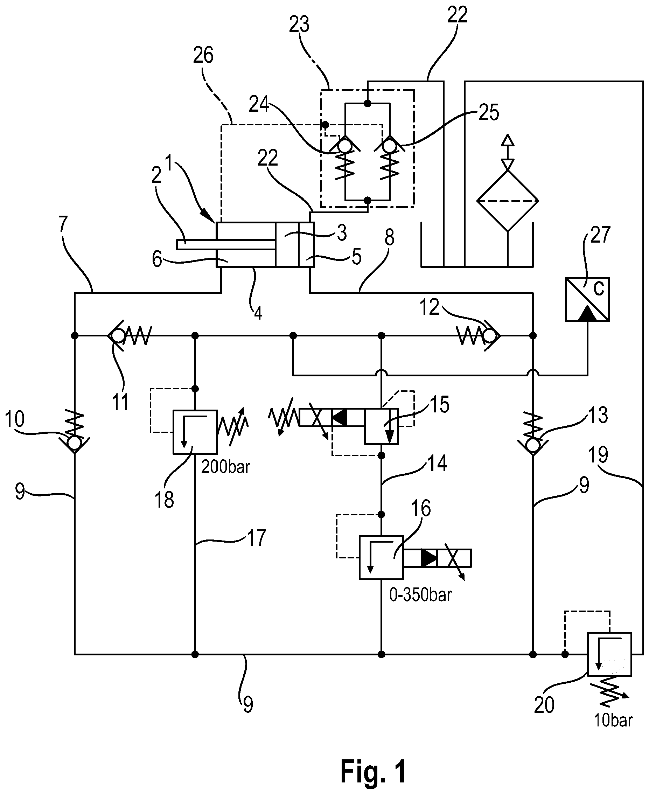

In den Figuren 1,2, 4 und 5 ist mit 1 ein doppeltwirkender Hydraulikzylinder bezeichnet, der einen mit einer Kolbenstange 2 versehenen Kolben 3 aufweist. Der Kolben 3 ist in einem Zylinder 4 längsverschiebbar geführt und begrenzt in diesem einen zylindrischen Druckraum 5 und einen hohlzylindrischen Druckraum 6. Von den Druckräumen 5 und 6 führen Druckleitungen 7 und 8 zu einem Dämpfungskreis 9, in dem zur gezielten Führung und Sperrung des Druckmittelstromes Rückschlagventile 10, 11,12 und 13 angeordnet sind.

Weiterhin wird gemäß der Figur 1 der Dämpfungskreis 9 überbrückt durch eine Dämpferleitung 14, die ein inverses Proportional-Druckbegrenzungsventil 15 und ein diesem nachgeschaltetes Proportional-Druckbegrenzungsventil 16 aufnimmt. Beide Proportional-Druckbegrenzungsventile 15 und 16 sind über einen elektrischen Steuerstrom vorgesteuert, wobei die entsprechende Steuerung und Steuerleitungen im Einzelnen nicht dargestellt sind. Das Proportional-Druckbegrenzungsventil 16 sorgt für eine Druckänderung in der jeweiligen Druckleitung 7 oder 8, aus der es angeströmt wird, wobei diese Druckbeaufschlagung pproportional zu dem elektrischen Strom, mit dem es angesteuert wird, verändert wird. Dieser elektrische Strom wird dabei vorzugsweise in Abhängigkeit von der Fahrgeschwindigkeit eines Gelenksfahrzeuges verändert.

Das inverse Proportional-Druckbegrenzungsventil 15 wird im Fahrbetrieb ebenfalls bestromt und beeinflusst somit gemeinsam mit dem diesem nachgeschalteten Proportional-Druckbegrenzungsventil 16 den Druck in den Druckleitungen 7 und 8. Auf diese Druckveränderungen mittels der beiden Proportional-Druckbegrenzungsventile 15 und 16 wird nachfolgend noch näher eingegangen werden.

Über die Rückschlagventile 11 und 12 stehen die Druckleitungen 7 und 8 derart mit dem Dämpfungskreis 9 in Verbindung, dass ein aus diesen Druckräumen 5 oder 6 verdrängtes Druckmittel in die Dämpferleitung 14 gelangt. Demgegenüber sperren die Rückschlagventile 10 und 13 eine Strömung des Druckmittels im Dämpfungskreis 9 in einer von der Dämpferleitung 14 wegweisenden Richtung. Das jeweils aus einem der Druckräume 5 oder 6 verdrängte Druckmittel wird also gezielt der Dämpferleitung 14 zugeführt. Weiterhin verläuft parallel zur Dämpferleitung 14 eine Verbindungsleitung 17, die ein als Sicherheitsventil dienendes Druckbegrenzungsventil 18 aufnimmt. Außerdem geht vom Dämpfungskreis 9, austrittsseitig der Dämpferleitung 14 eine Tankleitung 19 aus, in der ein Vorspannventil 20, das ebenfalls als Druckbegrenzungsventil ausgebildet ist, angeordnet ist. Diese Tankleitung 19 mündet in ein Ölreservoir 21.

Wie weiterhin aus der Figur 1 hervorgeht, steht der zylindrische Druckraum 5 über eine Nachsaugleitung 22 mit dem Ölreservoir 21 in Verbindung, wobei sich innerhalb der Nachsaugleitung 22 eine Rückschlagventileinheit 23 befindet. Diese Rückschlagventileinheit 23 besteht aus zwei entsperrbaren Rückschlagventilen 24 und 25, die über eine an den hohlzylindrischen Druckraum 6 angeschlossene Steuerleitung 26 in ihre geöffnete Stellung betätigbar sind. Außerdem ist an den Dämpfungskreis 9 zur Überwachung des Dämpfungssystems ein mit 27 bezeichneter Drucksensor angeschlossen.

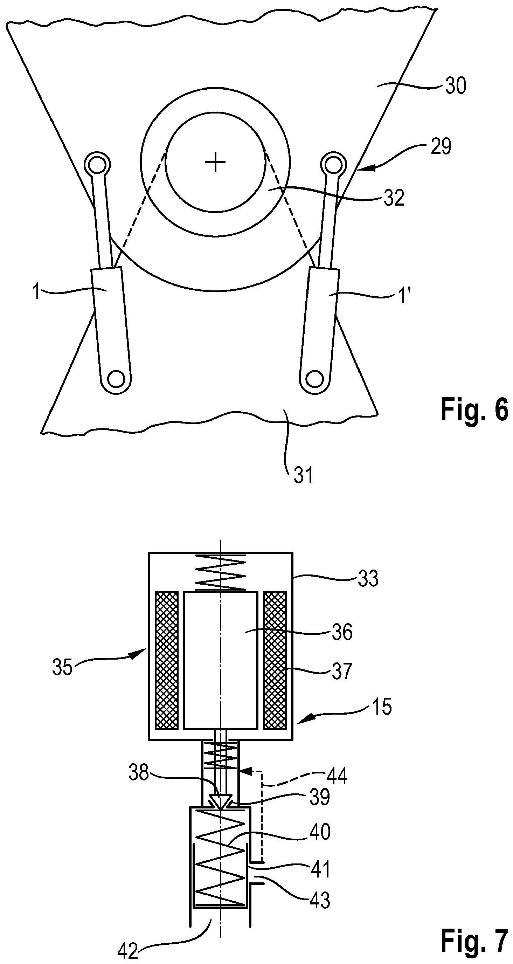

Die Funktion des Dämpfungssystem ist folgende:
Während einer Geradeausfahrt oder Kurvenfahrt eines mit einer Gelenkanordnung, beispielsweise gemäß Figur 6, versehenen Gelenksfahrzeugs wirken Druckkräfte auf die Kolbenstange 2 und somit auf den Kolben 3, so dass in entsprechender Weise der Druck der in den Druckräumen 5 und 6 befindlichen Druckflüssigkeit ansteigt. Tritt dieser Druckanstieg beispielsweise im Druckraum 5 auf, so wird er über das jeweilige Rückschlagventil 11 oder 12 in den Dämpfungskreis 9 übertragen und steht somit über die Dämpferleitung 14 zunächst am inversen Proportional-Druckbegrenzungsventil 15 an und führt in Abhängigkeit von der Höhe des Druckes zu dessen Betätigung. Das aus dem inversen Proportional- Druckbegrenzungsventil 15 austretende Druckmittel gelangt in einer zweiten Stufe zu dem diesem nachgeschalteten Proportional-Druckbegrenzungsventil 16, das beispielsweise auf einen Begrenzungsdruck von 0 - 350 bar einstellbar sein kann.

Unter dem Begriff" Proportional-Druckbegrenzungsventil" versteht man im Allgemeinen Druckventile, die ein veränderliches Eingangssignal stufenlos in ein hydraulisches Ausgangssignal umsetzen. Das aus der Dämpferleitung 14 ausströmende Druckmittel wird also schließlich über das Proportional-Druckbegrenzungsventil 16 unter Druckabfall in den weiteren Leitungsabschnitt des Dämpfungskreises geleitet, wo es über das Rückschlagventil 10 in den hohlzylindrischen Druckraum 6 gelangt. Dabei sperrt das Rückschlagventil 11 diesen Leitungsabschnitt gegenüber dem unter Druck stehenden Leitungsabschnitt des Dämpfungskreises 9 ab. Ein Teil des Druckmittels kann dabei über das Vorspannventil 20 in das Ölreservoir 21 fließen, was unter anderem erforderlich ist, da die Volumina der Druckräume 5 und 6 aufgrund unterschiedlicher Querschnittsflächen voneinander abweichen.

Bewegt sich dagegen der Kolben 3 in Richtung des hohlzylindrischen Druckraumes 6, so wird in diesem, also auf der Seite der Kolbenstange 2 ein Volumenstrom erzeugt, der vollständig über das Rückschlagventil 11 in die Dämpferleitung 14 gelangt. Bei entsprechendem Druckanstieg auf einen elektrisch eingestellten Begrenzungsdruck durchströmt dieser Volumenstrom zunächst das bestromte inverse Proportional-Druckbegrenzungsventil 15 sowie anschließend bei Erreichen des entsprechend eingestellten Begrenzungsdrucks das Proportional-Druckbegrenzungsventil 16, um dann durch das geöffnete Rückschlagventil 13 und die Druckleitung 8 in den Druckraum 5 zu strömen.

Der dabei durch das Proportional-Druckbegrenzungsventil 16 im Druckraum 6 erzeugte Druck wird über die Steuerleitung 26 auf die entsperrbarer Rückschlagventileinheit 23 übertragen. Diese stellt eine Verbindung zwischen dem Ölreservoir 21 und dem Druckraum 5 her, so dass ein fehlendes Ölvolumen ausgeglichen werden kann. Damit diese Ölmenge aus dem Ölreservoir 21 nachgesaugt werden kann, ist dieses mit einer ein Belüftungsfilter 28 aufweisenden Belüftung versehen, über die eine entsprechende Luftmenge in das Ölreservoir 21 einströmt oder wieder aus diesem austritt.

Der positive Effekt dieser Art der Nachsaugung liegt darin, dass der Ölstrom in den Druckraum 5 nicht die Druckdifferenz eines federbelasteten Rückschlagventils überwinden muss, sondern dass dieser durch die zwangsweise geöffneten Rückschlagventile 24 und 25 fließt. Beim Nachsaugen müsste anderenfalls, also bei der Verwendung eines einfachen Rückschlagventils, das keine externe Betätigung aufweist, die Druckdifferenz im Rückschlagventil, die sich anteilig unter anderen aus dem Strömungswiderstand und dem Vorspanndruck der Rückschlagventil Feder addiert, überwunden werden. Der Strömungswiderstand hängt dabei vom Betrag des fließenden Ölvolumenstroms und der Viskosität des Hydraulikmediums ab.

Mit zunehmender Verfahrgeschwindigkeit des Kolbens 3 und zunehmender Viskosität, also insbesondere bei sinkender Öltemperatur, steigt die Druckdifferenz. Wenn die Druckdifferenz höher ist als der atmosphärische Druck im Ölreservoir, tritt aber Kavitation auf. Diese kann somit durch die Erfindung wirkungsvoll verhindert werden. Ein entsprechendes Nachsaugen in den Druckraum 6 über eine gesteuerte Ventileinheit ist nicht erforderlich, da dieser stets mit dem am Vorspannventil 20 eingestellten Druck zwangsbefüllt wird.

Das inverse Proportional-Druckbegrenzungsventil 15 ist derart ausgebildet, dass es im stromlosen Zustand eines in dessen Vorsteuereinheit vorgesehenen Proportionalmagneten oder bei einem Ausfall der elektromagnetischen Betätigung im Dämpfungssystem einen Nenndruck einstellen kann. Es weist eine Funktion auf, nach der bei einem steigenden elektrischen Eingangssignal der in der jeweiligen Druckleitung 7 oder 8 erzeugte Druck absinkt, wohingegen dieser bei einem sinkenden Einzelgangsignal steigt. Somit ist die Wirkung des inversen proportional-Druckbegrenzungsventils 15 der diesem in der Dämpferleitung 14 nachfolgenden Proportional-Druckbegrenzungsventils 16 entgegengesetzt.

Erfindungsgemäß ist nun vorgesehen, dass diese beiden Proportional-Druckbegrenzungsventile 15 und 16 hinsichtlich ihrer Druckverläufe so aufeinander abgestimmt sind, dass sich über diese Einheit in Abhängigkeit von den jeweiligen Fahrzuständen des Gelenksfahrzeuges ein bestimmter Dämpfungsdruck einstellen lässt. Wie aus der Figur 1 hervorgeht, soll beispielsweise das Proportional-Druckbegrenzungsventil 16 einen steuerbaren Begrenzungsdruck von 0-350 bar aufweisen. Demgegenüber wird das inverse proportional-Druckbegrenzungsventil 15 einen untersten Wert des Begrenzungsdruckes aufweisen, der vorgegeben ist, um im Notbetrieb des Dämpfungssystems das Gelenkfahrzeug sicher in die nächste Werkstatt zu fahren.

Im Normalbetrieb der Dämpfungseinrichtung sollen sich dagegen, wie bereits erläutert, die jeweiligen Begrenzungsdrücke beider Proportional-Druckbegrenzungsventile 15 und 16 addieren, so dass jeweils eine vorgegebene Höhe des Begrenzungsdruckes erreicht wird. Darüber hinaus ist es auch möglich, nur mittels des inversen Proportional-Druckbegrenzungsventils 15, also ohne das zusätzliche Proportional-Druckbegrenzungsventil 16 sowohl einen Normalbetrieb als auch einen Notbetrieb zu gewährleisten, wenn das inverse Proportional-Druckbegrenzungsventil 15 im Normalbetrieb auf einen sehr geringen Druck eingestellt werden kann, aber im Notbetrieb, also wenn es durch einen Defekt in einen stromlosen Zustand gelangt, den Nenndruck auf einen höheren Nenndruck als Fail-Safe-Funktion einstellt.

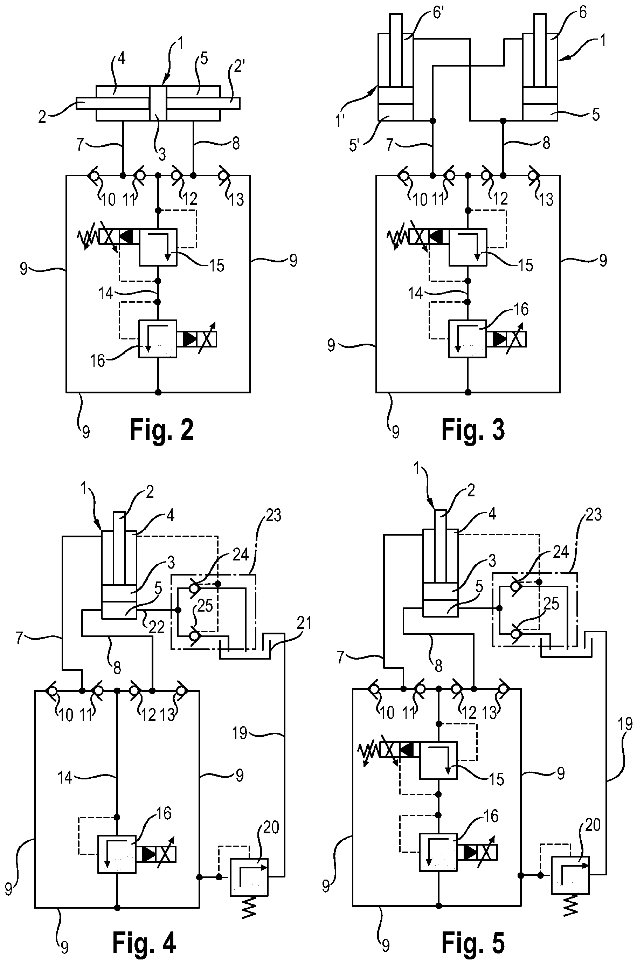

Im Unterschied zur Figur 1 zeigt die Figur 2 den doppeltwirkenden Hydraulikzylinder 1 in einer Ausführung, in der dieser eine weitere Kolbenstange 2' aufweist. Außerdem besteht in diesem Fall das Dämpfungssystem nur aus dem Dämpfungskreis 9 und der Dämpferleitung 14 mit dem inversen Proportional-Druckbegrenzungsventil 15 und dem Proportional-Druckbegrenzungsventil 16. In diesem Fall wurde also sowohl auf eine Verbindungsleitung mit einem weiteren Druckbegrenzungsventil als auch auf ein Ölreservoir mit einer Tankleitung, einem Vorspannventil und einer Einrichtung zum Nachsaugen des Druckmittels verzichtet. Der doppeltwirkende Hydraulikzylinder 1 weist zwei Druckräume 6 und 6' auf, die beide hohlzylindrisch ausgebildet sind.

Die Anordnung nach der Figur 3 stimmt, soweit es um den Dämpfungskreis 9, die Dämpferleitung 14 und die Proportional-Druckbegrenzungsventile 15 und 16 geht, im Wesentlichen mit der Anordnung nach der Figur 2 überein, wobei in diesem Fall aber zwei doppelt wirkende Hydraulikzylinder 1 und 1' verwendet werden. Dabei ist die Druckleitung 7 an den zylindrischen Druckraum 5' des Hydraulikzylinders 1' und an den hohlzylindrischen Druckraum 6 des Hydraulikzylinders 1 angeschlossen. Weiterhin sind die Druckräume 6' und 5 zusammengeführt und mit der Druckleitung 8 verbunden.

Nach den Figuren 4 und 5 ist in Übereinstimmung mit der Figur 1 dem Druckraum 5 eine Nachsaugeinrichtung zugeordnet, die das bereits erläuterte Ölreservoir, die Rückschlagventileinheit 23 und die Steuerleitung 26 beinhaltet. Außerdem geht von dem Dämpferkreis 9 die Tankleitung mit dem darin angeordneten Vorspannventil 20 aus. Bei der Ausführungsform nach der Figur 4 ist in der Dämpferleitung 14 nur das elektrisch vorgesteuerte Proportional-Druckbegrenzungsventil 16 angeordnet. Nach der Figur 5 sind in der Dämpferleitung 14 sowohl das inverse Proportional-Druckbegrenzungsventil 15 als auch das elektrisch vorgesteuerte Proportional-Druckbegrenzungsventil 16 angeordnet. In beiden Fällen wurde auf die Verbindungsleitung mit dem Druckbegrenzungsventil verzichtet.

Die Figur 6 zeigt eine Gelenkanordnung 29 für ein nicht näher dargestelltes Gelenkfahrzeug, das vorzugsweise als Gelenkbus ausgebildet sein soll. Diese besteht aus einem vorderen Fahrzeugteil 30 und einem hinteren Fahrzeugteil 31, die über ein Drehgelenk 32 miteinander verbunden sind. Vorzugsweise wird das Gelenkfahrzeug über eine nicht näher dargestellte Antriebsachse angetrieben, die sich im hinteren Fahrzeugteil befindet. Die Fahrzeugteile 30 und 31 sind über die doppeltwirkenden Hydraulikzylinder 1 und 1' des zuvor erläuterten Dämpfungssystems derart zueinander geführt, dass sie während einer Geradeausfahrt oder Kurvenfahrt stabilisiert sind, also nicht ausbrechen können.

Eine mögliche Ausbildung des inversen Proportional-Druckbegrenzungsventils 15 geht als schematische Darstellung aus der Figur 7 hervor. Danach weist das Proportional-Druckbegrenzungsventil 15 ein Gehäuse 33 auf, in dem ein Hauptventil 34 und eine Vorsteuerstufe 35 angeordnet sind. Die Vorsteuerstufe 35 weist einen Anker 36 und Spulen 37 auf, wobei der Anker 36 mit einem Sitzventilkörper 38, der mit einem im Gehäuse 33 vorgesehenen Ventilsitz 39 zusammenwirkt. Das Hauptventil 34 besteht aus einem im Gehäuse 33 verschiebbar geführten und über eine Ventilfeder 40 in diesem abgestützten Steuerkolben 41. Der Steuerkolben 41 wird über einen ersten Anschluss 42 des Gehäuses 33 mit dem Druck aus einem der Druckräume (siehe Figur 1; Druckräume 5 oder 6) beaufschlagt und entgegen der Kraft der Ventilfeder 40 verschoben, bis das Druckmittel in einen zweiten Anschluss 43, der mit der Dämpferleitung 14 verbunden sein soll, übertritt. Über den Sitzventilkörper 38, an dessen Rückseite über eine Steuerleitung 44 ein hydraulischer Steuerdruck wirkt, kann der zu begrenzende Druck stufenlos eingestellt werden.

### Bezugszeichen

- 1: doppeltwirkender Hydraulikzylinder
- 1: doppeltwirkender Hydraulikzylinder
- 2: Kolbenstange
- 2': Kolbenstange
- 3: Kolben
- 3': Kolben
- 4: Zylinder
- 4': Zylinder
- 5: zylindrischer Druckraum
- 5': zylindrischer Druckraum
- 6: hohlzylindrischer Druckraum
- 6': zylindrischer Druckraum
- 7: Druckleitung
- 8: Druckleitung
- 9: Dämpfungskreis
- 10: Rückschlagventil
- 11: Rückschlagventil
- 12: Rückschlagventil
- 13: Rückschlagventil
- 14: Dämpferleitung
- 15: inverses Proportional-Druckbegrenzungsventil
- 16: Proportional-Druckbegrenzungsventil
- 17: Verbindungsleitung
- 18: Druckbegrenzungsventil
- 19: Tankleitung
- 20: Vorspannventil
- 21: Ölreservoir
- 22: Nachsaugleitung
- 23: Rückschlagventileinheit
- 24: entsperrbares Rückschlagventil
- 25: entsperrbares Rückschlagventil
- 26: Steuerleitung
- 27: Drucksensor
- 28: Belüftungsfilter
- 29: Gelenkanordnung
- 30: vorderes Fahrzeugteil
- 31: hinteres Fahrzeugteil
- 32: Drehgelenk
- 33: Gehäuse von 15
- 34: Hauptventil von 15
- 35: Vorsteuerstufe von 15
- 36: Anker von 35
- 37: Spulen von 35
- 38: Sitzventilkörper von 35
- 39: Ventilsitz
- 40: Ventilfeder von 34
- 41: Steuerkolben von 34
- 42: erster Anschluss von 15
- 43: zweiter Anschluss von 15
- 44: Steuerleitung

## Patentansprüche

1. Hydraulisches Dämpfungssystem zur Dämpfung von Schwenkbewegungen zweier zumindest mittelbar über ein Drehgelenk (32) miteinander verbundener Fahrzeugteile (30 und 31) mit zumindest einem als doppeltwirkender Hydraulikzylinder (1, 1') ausgebildeten Dämpfer, dessen druck- und saugseitige Druckräume (5, 5', 6, 6') über ein Proportional-Druckbegrenzungsventil miteinander verbunden sind, **dadurch gekennzeichnet, dass** das Proportional-Druckbegrenzungsventil als elektrisch vorgesteuertes inverses Proportional-Druckbegrenzungsventil (15) ausgebildet ist, mit dem im stromlosen Zustand eines Proportionalmagneten (36) oder bei einem Ausfall der elektromagnetischen Betätigung im Dämpfungssystem ein Nenndruck einstellbar ist.

2. Hydraulisches Dämpfungssystem nach Patentanspruch 1, **dadurch gekennzeichnet, dass** mit dem inversen Proportional-Druckbegrenzungsventil (15) ein Proportional-Druckbegrenzungsventil (16) in Reihe geschaltet ist, und dass in einem Notbetrieb des Dämpfungssystems ein hydraulischer Druck in dem jeweiligen Druckraum (5, 5', 6, 6') ausschließlich über das inverse Proportional-Druckbegrenzungsventil (15) erzielbar ist.

3. Hydraulisches Dämpfungssystem nach Patentanspruch 2, **dadurch gekennzeichnet, dass** das inverse Proportional-Druckbegrenzungsventil (15) dem Proportional-Druckbegrenzungsventil (16) vorgeschaltet ist.

4. Hydraulisches Dämpfungssystem nach Patentanspruch 1, **dadurch gekennzeichnet, dass** eine Vorsteuerstufe (35) des inversen Proportional-Druckbegrenzungsventils (15) bei einer Verringerung des Steuerstromes in eine Sperrstellung verstellt wird und einen Steuerdruck an einem Hauptkolben (41) des inversen Proportional-Druckbegrenzungsventils (15) aufbaut.

5. Hydraulisches Dämpfungssystem nach Patentanspruch 1, **dadurch gekennzeichnet, dass** zur Begrenzung des Druckes in den Druckräumen (5, 5', 6, 6') und der an Kolbenstangen (2, 2') des zumindest einen Hydraulikzylinders (1, 1') wirkenden Kräfte zum inversen Proportional-Druckbegrenzungsventil (15) ein Druckbegrenzungsventil (18) parallel geschaltet ist.

6. Hydraulisches Dämpfungssystem nach Patentanspruch 1, **dadurch gekennzeichnet, dass** austrittsseitig einer das inverse Proportional-Druckbegrenzungsventil (15) und das Proportional-Druckbegrenzungsventil (16) aufnehmenden Dämpferleitung (14) von dieser eine an ein Ölreservoir (21) angeschlossene ein Vorspannventil (20) aufnehmende Tankleitung (19) angeschlossen ist.

7. Hydraulisches Dämpfungssystem nach Patentanspruch 1, **dadurch gekennzeichnet, dass** zumindest einer der Druckräume (5) über zumindest ein entsperrbares Rückschlagventil (24, 25) mit einem Ölreservoir (21) verbindbar ist.

8. Hydraulisches Dämpfungssystem nach Patentanspruch 7, **dadurch gekennzeichnet, dass** das zumindest eine entsperrbare Rückschlagventil (24, 25) über eine an einen der Druckräume (6) angeschlossene Steuerleitung (26) in seine Öffnungsstellung betätigbar ist.

9. Hydraulisches Dämpfungssystem zur Dämpfung von Schwenkbewegungen zweier zumindest mittelbar über ein Drehgelenk (32) miteinander verbundener Fahrzeugteile (30 und 31) mit zumindest einem als doppeltwirkender Hydraulikzylinder (1) ausgebildeten Dämpfer, dessen druck- und saugseitige Druckräume (5, 6) über ein Proportional-Druckbegrenzungsventil miteinander verbunden sind, **dadurch gekennzeichnet, dass** zumindest einer der Druckräume (5) über zumindest ein entsperrbares Rückschlagventil (24, 25) mit einem Ölreservoir (21) verbindbar ist.

10. Hydraulisches Dämpfungssystem nach Patentanspruch 9, **dadurch gekennzeichnet, dass** das zumindest eine entsperrbare Rückschlagventil (24, 25) über eine an einen der Druckräume (6) angeschlossene Steuerleitung (26) in seine Öffnungsstellung betätigbar ist.

11. Hydraulisches Dämpfungssystem nach Patentanspruch 9, **dadurch gekennzeichnet, dass** das Dämpfungssystem nach einem der Patentansprüche 1 bis 6 ausgebildet ist.

12. Gelenkfahrzeug, bei dem zwei Fahrzeugteile (30 und 31) zumindest mittelbar über ein Drehgelenk (32) schwenkbar miteinander verbunden und mittels zumindest eines doppeltwirkenden Hydraulikzylinders (1, 1') eines Dämpfungssystems zueinander geführt sind, wobei in einer druck- und saugseitige Druckräumen (5, 5', 6, 6') des zumindest einen Hydraulikzylinders (1, 1') verbindenden Dämpferleitung (14) ein Proportional-Druckbegrenzungsventil angeordnet ist, gekennzeichnet nach einem der Patentansprüche 1 bis 11.

## Claims

1. A hydraulic damping system for damping pivotal movements of two vehicle parts (30 and 31) which are connected together at least indirectly by way of a rotary joint (32) with at least one damper which is in the form of a double-acting hydraulic cylinder (1, 1') and whose pressure-side and suction-side pressure chambers (5, 5', 6, 6') are connected together by way of a proportional pressure limiting valve, **characterised in that** the proportional pressure limiting valve is in the form of an electrically pilot-controlled inverse proportional pressure limiting valve (15), with which a nominal pressure can be set in the damping system in the current-less state of a proportional solenoid (36) or in the event of failure of the electromagnetic actuation.

2. A hydraulic damping system according to claim 1 **characterised in that** a proportional pressure limiting valve (16) is connected in series with the inverse proportional pressure limiting valve (15) and in an emergency mode of the damping system a hydraulic pressure can be achieved in the respective pressure chamber (5, 5', 6, 6') exclusively by way of the inverse proportional pressure limiting valve (15).

3. A hydraulic damping system according to claim 2 **characterised in that** the inverse proportional pressure limiting valve (15) is connected upstream of the proportional pressure limiting valve (16).

4. A hydraulic damping system according to claim 1 **characterised in that** a pilot control stage (35) of the inverse proportional pressure limiting valve (15) is moved into a blocking position upon a reduction in the control current and builds up a control pressure at a main piston (41) of the inverse proportional pressure limiting valve (15).

5. A hydraulic damping system according to claim 1 **characterised in that** to limit the pressure in the pressure chambers (5, 5', 6, 6') and the forces acting at piston rods (2, 2') of the at least one hydraulic cylinder (1, 1') a pressure limiting valve (18) is connected in parallel with the inverse proportional pressure limiting valve (15).

6. A hydraulic damping system according to claim 1 **characterised in that** connected at the outlet side of a damper line (14) accommodating the inverse proportional pressure limiting valve (15) and the proportional pressure limiting valve (16) from same is a tank line (19) connected to an oil reservoir (21) and accommodating a biasing valve (20).

7. A hydraulic damping system according to claim 1 **characterised in that** at least one of the pressure chambers (5) can be connected to an oil reservoir (21) by way of at least one releasable non-return valve (24, 25).

8. A hydraulic damping system according to claim 7 **characterised in that** the at least one releasable non-return valve (24, 25) can be actuated into its open position by way of a control line (26) connected to one of the pressure chambers (6).

9. A hydraulic damping system for damping pivotal movements of two vehicle parts (30 and 31) which are connected together at least indirectly by way of a rotary joint (32) with at least one damper which is in the form of a double-acting hydraulic cylinder (1, 1') and whose pressure-side and suction-side pressure chambers (5, 5', 6, 6') are connected together by way of a proportional pressure limiting valve, **characterised in that** at least one of the pressure chambers (5) can be connected to an oil reservoir (21) by way of at least one releasable non-return valve (24, 25).

10. A hydraulic damping system according to claim 9 **characterised in that** the at least one releasable non-return valve (24, 25) can be actuated into its open position by way of a control line (26) connected to one of the pressure chambers (6).

11. A hydraulic damping system according to claim 9 **characterised in that** the damping system is in accordance with one of claims 1 to 6.

12. An articulated vehicle in which two vehicle parts (30 and 31) are pivotably connected together at least indirectly by way of a rotary joint (32) and are guided relative to each other by means of at least one double-acting hydraulic cylinder (1, 1') of a damping system, wherein arranged in a damper line (14) connecting pressure-side and suction-side pressure chambers (5, 5', 6, 6') of the at least one hydraulic cylinder (1, 1') is a proportional pressure limiting valve, characterised according to one of claims 1 to 11.

## Revendications

1. Système d'amortissement hydraulique pour l'amortissement de mouvements pivotants de deux parties de véhicule (30 et 31) reliées entre elles au moins indirectement par l'intermédiaire d'une articulation pivotante (32), comprenant au moins un amortisseur qui est conformé en vérin hydraulique à double effet (1, 1') et dont les chambres de pression côté refoulement et côté aspiration (5, 5', 6, 6') sont reliées entre elles par l'intermédiaire d'une valve de limitation de pression proportionnelle, **caractérisé en ce que** la valve de limitation de pression proportionnelle est conformée en valve de limitation de pression proportionnelle inverse pilotée électriquement (15), avec laquelle une pression nominale peut être établie dans le système d'amortissement à l'état sans courant d'un aimant proportionnel (36) ou en cas de défaillance de l'actionnement électromagnétique.

2. Système d'amortissement hydraulique selon la revendication 1, **caractérisé en ce qu'**une valve de limitation de pression proportionnelle (16) est montée en série avec la valve de limitation de pression proportionnelle inverse (15), et **en ce que**, dans un fonctionnement d'urgence du système d'amortissement, une pression hydraulique est atteignable dans la chambre de pression respective (5, 5', 6, 6') uniquement par l'intermédiaire de la valve de limitation de pression proportionnelle inverse (15).

3. Système d'amortissement hydraulique selon la revendication 2, **caractérisé en ce que** la valve de limitation de pression proportionnelle inverse (15) est disposée en amont de la valve de limitation de pression proportionnelle (16).

4. Système d'amortissement hydraulique selon la revendication 1, **caractérisé en ce que**, en cas de diminution du flux pilote, un étage pilote (35) de la valve de limitation de pression proportionnelle inverse (15) est déplacé dans une position d'arrêt et établit une pression de commande au niveau d'un piston principal (41) de la valve de limitation de pression proportionnelle inverse (15).

5. Système d'amortissement hydraulique selon la revendication 1, **caractérisé en ce que**, pour limiter la pression dans les chambres de pression (5, 5', 6, 6') et les forces agissant sur les tiges de pistons (2, 2') du au moins un vérin hydraulique (1, 1'), une valve de limitation de pression (18) est montée en parallèle à la valve de limitation de pression proportionnelle inverse (15).

6. Système d'amortissement hydraulique selon la revendication 1, **caractérisé en ce qu'**au côté sortie d'une conduite d'amortisseur (14) recevant la valve de limitation de pression proportionnelle inverse (15) et la valve de limitation de pression proportionnelle (16) est reliée, à partir de ladite conduite, une conduite de réservoir (19) reliée à un réservoir d'huile (21) et recevant une valve de précontrainte (20).

7. Système d'amortissement hydraulique selon la revendication 1, **caractérisé en ce qu'**au moins une des chambres de pression (5) peut être reliée à un réservoir d'huile (21) par l'intermédiaire d'au moins une valve anti-retour déblocable (24, 25).

8. Système d'amortissement hydraulique selon la revendication 7, **caractérisé en ce que** la au moins une valve anti-retour déblocable (24, 25) peut être amenée dans sa position ouverte par l'intermédiaire d'une conduite pilote (26) reliée à une des chambres de pression (6).

9. Système d'amortissement hydraulique pour l'amortissement de mouvements pivotants de deux parties de véhicule (30 et 31) reliées entre elles au moins indirectement par l'intermédiaire d'une articulation pivotante (32), comprenant au moins un amortisseur qui est conformé en vérin hydraulique à double effet (1) et dont les chambres de pression côté refoulement et côté aspiration (5, 6) sont reliées entre elles par l'intermédiaire d'une valve de limitation de pression proportionnelle, **caractérisé en ce qu'**au moins une des chambres de pression (5) peut être reliée à un réservoir d'huile (21) par l'intermédiaire d'au moins une valve anti-retour déblocable (24, 25).

10. Système d'amortissement hydraulique selon la revendication 9, **caractérisé en ce que** la au moins une valve anti-retour déblocable (24, 25) peut être amenée dans sa position ouverte par l'intermédiaire d'une conduite pilote (26) reliée à une des chambres de pression (6).

11. Système d'amortissement hydraulique selon la revendication 9, **caractérisé en ce que** le système d'amortissement est conformé selon une des revendications 1 à 6.

12. Véhicule articulé dans lequel deux parties de véhicule (30 et 31) sont reliées entre elles de manière pivotante au moins indirectement par l'intermédiaire d'une articulation pivotante (32) et sont guidées l'une par rapport à l'autre au moyen d'au moins un vérin hydraulique à double effet (1, 1') d'un système d'amortissement, une valve de limitation de pression proportionnelle étant disposée sur une conduite d'amortisseur (14) reliant des chambres de pression côté refoulement et côté aspiration (5, 5', 6, 6') du au moins un vérin hydraulique (1, 1'), caractérisé selon une des revendications 1 à 11.
